# EUROPEAN PATENT APPLICATION

(11) **EP 4 681 996 A1**
(43) Date of publication of application: **21.01.2026**
(21) Application number: 24847781.2
(22) Date of filing: 07.06.2024
(51) Int. Cl.: B60S 1/08

(54) **WINDSHIELD WIPER CONTROL METHOD AND APPARATUS, AND DEVICE AND MEDIUM**

(30) Priority: 28.07.2023 CN 202310944497
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: KANG, Zhiwen, Hangzhou Bay New District, Ningbo, Zhejiang 315336 (CN); SUN, Chengtao, Hangzhou Bay New District, Ningbo, Zhejiang 315336 (CN); DING, Jianze, Hangzhou Bay New District, Ningbo, Zhejiang 315336 (CN); WU, Jiangcai, Hangzhou Bay New District, Ningbo, Zhejiang 315336 (CN); LIU, Donghui, Hangzhou Bay New District, Ningbo, Zhejiang 315336 (CN)
(74) Representative: Boult Wade Tennant LLP
(86) International application number: PCT/CN2024/098081
(87) International publication number: WO 2025/025818

(57) **Abstract**

Disclosed are a windshield wiper control method and apparatus, a device and a medium. A current state of a driver-side door of a vehicle is acquired; if the current state of the driver-side door of the vehicle is an open state and a current operating mode of a windshield wiper is a manual mode, an instruction to disable reception of a windshield wiper start request is transmitted to a windshield wiper driver. The current operating mode of the windshield wiper is an automatic mode, an instruction to inhibit generation of the windshield wiper start request is transmitted to a rain sensor. When the current state of the driver-side door of the vehicle is a closed state, the occupancy status of the driver-side seat or the occupancy status of the passenger-side seat is occupied and the current operating mode of the windshield wiper is the manual mode, an instruction to enable the reception of the windshield wiper start request is transmitted to the windshield wiper driver. If the occupancy status of the driver-side seat or the occupancy status of the passenger-side seat is occupied, and the current operating mode of the windshield wiper is the automatic mode, an instruction to permit the generation of the windshield wiper start request is transmitted to the rain sensor. A windshield wiper control apparatus, a device and a medium are also disclosed. Based on the method provided by the present application, the flexibility of the windshield wiper driver driving the windshield wiper to operate can be improved.

## Description

This application claims priority to Chinese Patent Application No. 202310944497.1, filed with the China National Intellectual Property Administration on July 28, 2023 and entitled "WINDSHIELD WIPER CONTROL METHOD, APPARATUS, DEVICE AND MEDIUM", which is incorporated herein by reference in its entirety.

### TECHNICAL FIELD

The present application relates to the field of intelligent automobiles, and in particular, to a windshield wiper control method and apparatus, a device and a medium.

### BACKGROUND

When a windshield wiper is in an automatic mode, a rain sensor, upon detecting rainfall, issues a windshield wiper start request to a windshield wiper driver, and the windshield wiper driver turns on the windshield wiper based on the windshield wiper start request. When the windshield wiper is in a manual mode, a user chooses whether to turn on a windshield wiper switch handle to control turning-on of the windshield wiper.

At present, when the windshield wiper is in the automatic mode, as long as the vehicle is in a powered-on state, the rain sensor will normally be turned on, so the rain sensor will, upon detecting rainfall, issue the windshield wiper start request to the windshield wiper driver.

Therefore, when the user is outside the vehicle and it is raining at this time, the vehicle being in a powered-on state will cause the windshield wiper driver to drive the windshield wiper to operate, which may splash the rainwater on the windshield onto the customer. The flexibility of the windshield wiper driver driving the windshield wiper to operate is relatively low, affecting the user experience.

### SUMMARY

The present application provides a windshield wiper control method and apparatus, a device, and a medium, which can improve the flexibility of the windshield wiper driver driving the windshield wiper to operate.

In a first aspect, the present application provides a windshield wiper control method, and the method includes:
acquiring a current state of a driver-side door of a vehicle;
if the current state of the driver-side door of the vehicle is an open state, acquiring a current operating mode of a windshield wiper; if the current operating mode of the windshield wiper is a manual mode, issuing to a windshield wiper driver an instruction to disable reception of a windshield wiper start request; if the current operating mode of the windshield wiper is an automatic mode, issuing to a rain sensor an instruction to inhibit generation of the windshield wiper start request; the rain sensor is configured to detect rainfall and issue the windshield wiper start request to the windshield wiper driver upon detecting rainfall, and the windshield wiper driver is configured to turn on the windshield wiper based on the windshield wiper start request;
if the current state of the driver-side door of the vehicle is a closed state, acquiring occupancy status of a driver-side seat and occupancy status of a passenger-side seat; if the occupancy status of the driver-side seat or the occupancy status of the passenger-side seat is occupied, and the current operating mode of the windshield wiper is the manual mode, issuing to the windshield wiper driver an instruction to enable the reception of the windshield wiper start request; if the occupancy status of the driver-side seat or the occupancy status of the passenger-side seat is occupied, and the current operating mode of the windshield wiper is the automatic mode, issuing to the rain sensor an instruction to permit the generation of the windshield wiper start request.

In one example, the acquiring the state of the driver-side door of the vehicle, includes:
monitoring a micro-motion switch integrated on a lock of the driver-side door, when it is acquired that the micro-motion switch generates a trigger signal, determining that the state of the driver-side door of the vehicle is the closed state;
the acquiring the occupancy status of the driver-side seat and the occupancy status of the passenger-side seat includes:
   monitoring sensors installed in the driver-side seat and the passenger-side seat, and determining the occupancy status of the driver-side seat and the occupancy status of the passenger-side seat based on signals fed back by the sensors; or,
   acquiring information acquired by an in-vehicle camera, and determining the occupancy status of the driver-side seat and the occupancy status of the passenger-side seat based on the information acquired by the in-vehicle camera.

In one example, the monitoring the sensors installed in the driver-side seat and the passenger-side seat, and determining the occupancy status of the driver-side seat and the occupancy status of the passenger-side seat based on the signals fed back by the sensors includes:
monitoring a signal fed back by a first pressure sensor installed in the driver-side seat; when detecting that the first pressure sensor generates a first signal, determining a first pressure value corresponding to the first signal; if the first pressure value exceeds a set first pressure threshold, determining that the driver set is in occupancy status;
monitoring a signal fed back by a second pressure sensor installed in the passenger-side seat; when detecting that the second pressure sensor generates a second signal, determining a second pressure value corresponding to the second signal; if the second pressure value exceeds a set second pressure threshold, determining that the passenger-side seat is in occupancy status.

In one example, the if the occupancy status of the driver-side seat or the occupancy status of the passenger-side seat is occupied, and the current operating mode of the windshield wiper is the automatic mode, issuing to the rain sensor an instruction to permit the generation of the windshield wiper start request, includes:
if the occupancy status of the driver-side seat is occupied, and the current operating mode of the windshield wiper is the automatic mode, issuing to the rain sensor the instruction to permit the generation of the windshield wiper start request;
if the occupancy status of the driver-side seat is unoccupied, the passenger-side seat occupancy status is occupied, and the current operating mode of the windshield wiper is the automatic mode, issuing, after a preset first time period, to the rain sensor the instruction to permit the generation of the windshield wiper start request.

In one example, the rain sensor is a rain optical sensor or a camera.

In another aspect, the present application provides a windshield wiper control apparatus, and the apparatus includes:
an acquiring module, configured to acquire a current state of a driver-side door of a vehicle;
a processing module, configured to: if the current state of the driver-side door of the vehicle is an open state, acquire a current operating mode of a windshield wiper; if the current operating mode of the windshield wiper is a manual mode, issue to a windshield wiper driver an instruction to disable reception of a windshield wiper start request; if the current operating mode of the windshield wiper is an automatic mode, issue to a rain sensor an instruction to inhibit generation of the windshield wiper start request; the rain sensor is configured to detect rainfall and issue the windshield wiper start request to the windshield wiper driver upon detecting rainfall, and the windshield wiper driver is configured to turn on the windshield wiper based on the windshield wiper start request;
the processing module is further configured to: if the current state of the driver-side door of the vehicle is a closed state, acquire occupancy status of a driver-side seat and occupancy status of a passenger-side seat; if the occupancy status of the driver-side seat or the occupancy status of the passenger-side seat is occupied, and the current operating mode of the windshield wiper is the manual mode, issue to the windshield wiper driver an instruction to enable the reception of the windshield wiper start request; if the occupancy status of the driver-side seat or the occupancy status of the passenger-side seat is occupied, and the current operating mode of the windshield wiper is the automatic mode, issue to the rain sensor an instruction to permit the generation of the windshield wiper start request.

In one example, the acquiring module is specifically configured to monitor a micro-motion switch integrated on a lock of the driver-side door, when it is acquired that the micro-motion switch generates a trigger signal, determine that the state of the driver-side door of the vehicle is the closed state;
the processing module is specifically configured to:
monitor sensors installed in the driver-side seat and the passenger-side seat, and determine the occupancy status of the driver-side seat and the occupancy status of the passenger-side seat based on signals fed back by the sensors; or,
acquire information acquired by an in-vehicle camera, and determine the occupancy status of the driver-side seat and the occupancy status of the passenger-side seat based on the information acquired by the in-vehicle camera.

In one example, the processing module is specifically further configured to monitor a signal fed back by a first pressure sensor installed in the driver-side seat; when detecting that the first pressure sensor generates a first signal, determine a first pressure value corresponding to the first signal; if the first pressure value exceeds a set first pressure threshold, determine that the driver set is in occupancy status;
the processing module is specifically further configured to monitor a signal fed back by a second pressure sensor installed in the passenger-side seat; when detecting that the second pressure sensor generates a second signal, determine a second pressure value corresponding to the second signal; if the second pressure value exceeds a set second pressure threshold, determine that the passenger-side seat is in occupancy status.

In one example, the processing module is specifically further configured to issue to the rain sensor the instruction to permit the generation of the windshield wiper start request if the occupancy status of the driver-side seat is occupied and the current operating mode of the windshield wiper is the automatic mode;
the processing module is specifically further configured to: after a preset first time period, issue to the rain sensor the instruction to permit the generation of the windshield wiper start request if the occupancy status of the driver-side seat is unoccupied, the passenger-side seat occupancy status is occupied, and the current operating mode of the windshield wiper is the automatic mode.

In one example, the rain sensor is a rain optical sensor or a camera.

In another aspect, the present application provides an electronic device, including: a processor, and a memory communicatively coupled to the processor;
the memory stores computer executable instructions;
the processor executes the computer execute instructions stored in the memory to implement the method as described above.

In another aspect, the present application provides a computer-readable storage medium storing computer executable instructions, the computer executable instructions, when executed by a processor, are configured to implement the method according to any one of the foregoing examples.

The present application provides a windshield wiper control method and apparatus, a device and a medium. Firstly, a current state of a driver-side door of a vehicle is acquired. If the current state of the driver-side door of the vehicle is an open state, a current operating mode of a windshield wiper is acquired. If the current operating mode of the windshield wiper is a manual mode, an instruction to disable reception of a windshield wiper start request is transmitted to a windshield wiper driver. If the current operating mode of the windshield wiper is an automatic mode, an instruction to inhibit generation of the windshield wiper start request is transmitted to a rain sensor. The rain sensor is configured to detect rainfall and transmit the windshield wiper start request to the windshield wiper driver upon detecting rainfall. The windshield wiper driver is configured to turn on the windshield wiper based on the windshield wiper start request. If the current state of the driver-side door of the vehicle is a closed state, occupancy status of a driver-side seat and occupancy status of a passenger-side seat are acquired. If the occupancy status of the driver-side seat or the occupancy status of the passenger-side seat is occupied, and the current operating mode of the windshield wiper is the manual mode, an instruction to enable the reception of the windshield wiper start request is transmitted to the windshield wiper driver. If the occupancy status of the driver-side seat or the occupancy status of the passenger-side seat is occupied, and the current operating mode of the windshield wiper is the automatic mode, an instruction to permit the generation of the windshield wiper start request is transmitted to the rain sensor. In the solution, based on the determination of the state of the driver-side door, the occupancy status of the driver-side seat or the occupancy status of the passenger-side seat, and a current operating mode of the windshield wiper, it is determined whether the rain brush needs to be driven based on the windshield wiper driver under different conditions. The flexibility of the windshield wiper driver driving the windshield wiper to work is improved.

### BRIEF DESCRIPTION OF DRAWINGS

The drawings herein are incorporated into the specification and constitute a part of the specification, illustrating embodiments consistent with the present disclosure, and are used together with the specification to explain the principles of the embodiments of the present disclosure.
FIG. 1 is a schematic diagram of an exemplary application scenario of the present application.
FIG. 2 is a flowchart of a windshield wiper control method provided by Embodiment 1 of the present application.
FIG. 3 is a windshield wiper control flowchart.
FIG. 4 is a schematic diagram of the windshield wiper operating in an automatic mode.
FIG. 5 is a schematic diagram of the windshield wiper operating in a manual mode.
FIG. 6 is a flowchart of another windshield wiper control method provided by Embodiment 1 of the present application.
FIG. 7 is a flowchart of yet another windshield wiper control method provided by Embodiment 1 of the present application.
FIG. 8 is a flowchart of yet another windshield wiper control method provided by Embodiment 1 of the present application;
FIG. 9 is another windshield wiper control flowchart.
FIG. 10 is a windshield wiper control apparatus provided by Embodiment 2 of the present application.
FIG. 11 is a structural diagram of an electronic device provided by Embodiment 3 of the present application.

Through the above drawings, embodiments clearly illustrating the present disclosure are shown, and more detailed descriptions will be provided below. These drawings and textual descriptions are not intended to limit the scope of the concepts of the present disclosure in any manner, but rather serve to illustrate the concepts of the present disclosure to those skilled in the art with reference to specific embodiments.

### DESCRIPTION OF EMBODIMENTS

The exemplary embodiments will be described in detail here, with examples shown in the accompanying drawings. When the following description refers to the drawings, unless otherwise indicated, the same numbers in different drawings indicate the same or similar elements. The embodiments described in the following exemplary embodiments do not represent all embodiments consistent with the present disclosure. Instead, they are merely examples of devices and methods consistent with certain aspects of the present disclosure as detailed in the appended claims.

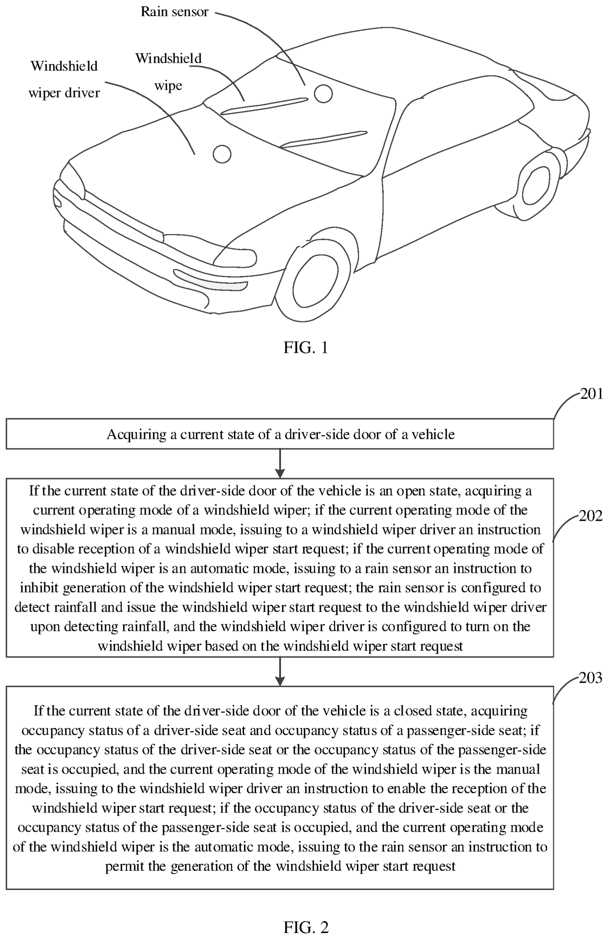

A specific application scenario of the present application is in the field of geophysics, and FIG. 1 is a schematic diagram of an exemplary application scenario of the present application. When a windshield wiper is in an automatic mode, a rain sensor, upon detecting rainfall, issues a windshield wiper start request to the windshield wiper driver, and the windshield wiper driver turns on the windshield wiper based on the windshield wiper start request. When the windshield wiper is in a manual mode, a user chooses whether to turn on a windshield wiper switch handle to control turning-on of the windshield wiper.

At present, when the windshield wiper is in the automatic mode, as long as the vehicle is in a powered-on state, the rain sensor will normally be turned on, so the rain sensor will, upon detecting rainfall, issue the windshield wiper start request to the windshield wiper driver. Therefore, when the user is outside the vehicle and it is raining at this time, the vehicle being in a powered-on state will cause the windshield wiper driver to drive the windshield wiper to operate, which may splash the rainwater on the windshield onto the customer. The flexibility of the windshield wiper driver driving the windshield wiper to operate is relatively low, affecting the user experience.

However, according to the method provided by the present application, it is possible to determine whether to disable the windshield wiper by acquiring a state of a driver-side door, determine whether a driver or a passenger is present in the vehicle by obtaining occupancy status of a driver-side seat and occupancy status of a passenger-side seat, and when the driver or the passenger is present in the vehicle, the windshield wiper can be used normally; otherwise, the windshield wiper is disabled. According to the method provided by the present application, the operation of the rain brush can be controlled under different conditions, thereby improving the flexibility of the windshield wiper's operation.

It should be noted that the brief description of the terms in the present application is only for facilitating the understanding of the embodiments described below, and is not intended to limit the embodiments of the present application. Unless otherwise stated, these terms should be understood according to their ordinary and usual meanings.

The following provides a detailed description of the technical solutions of the present application and the technical solutions of the present application with reference to specific embodiments. The following specific embodiments can be combined with each other, and the same or similar concepts or processes may not be repeated in some embodiments. In the description of the present application, unless otherwise explicitly specified and limited, all terms should be understood in a broad sense within the field. Embodiments of the present application will be described below with reference to the accompanying drawings.

### Embodiment 1

FIG. 2 is a flowchart of a windshield wiper control method provided by Embodiment 1 of the present application, the method includes:
Step 201, acquiring a current state of a driver-side door of a vehicle;
Step 202, if the current state of the driver-side door of the vehicle is an open state, acquiring a current operating mode of a windshield wiper; if the current operating mode of the windshield wiper is a manual mode, issuing to a windshield wiper driver an instruction to disable reception of a windshield wiper start request; if the current operating mode of the windshield wiper is an automatic mode, issuing to a rain sensor an instruction to inhibit generation of the windshield wiper start request; the rain sensor is configured to detect rainfall and issue the windshield wiper start request to the windshield wiper driver upon detecting rainfall, and the windshield wiper driver is configured to turn on the windshield wiper based on the windshield wiper start request.
Step 203, if the current state of the driver-side door of the vehicle is a closed state, acquiring occupancy status of a driver-side seat and occupancy status of a passenger-side seat; if the occupancy status of the driver-side seat or the occupancy status of the passenger-side seat is occupied, and the current operating mode of the windshield wiper is the manual mode, issuing to the windshield wiper driver an instruction to enable the reception of the windshield wiper start request; if the occupancy status of the driver-side seat or the occupancy status of the passenger-side seat is occupied, and the current operating mode of the windshield wiper is the automatic mode, issuing to the rain sensor an instruction to permit the generation of the windshield wiper start request.

The execution subject of the embodiment is a windshield wiper control apparatus. The windshield wiper control apparatus can be implemented through a computer program, for example, application software, etc.; or, it can also be implemented as a medium storing the relevant computer program, for example, a USB drive, a cloud disk, etc.; furthermore, it can also be implemented through an entity device integrated with or installed with the relevant computer program, for example, a chip, etc.

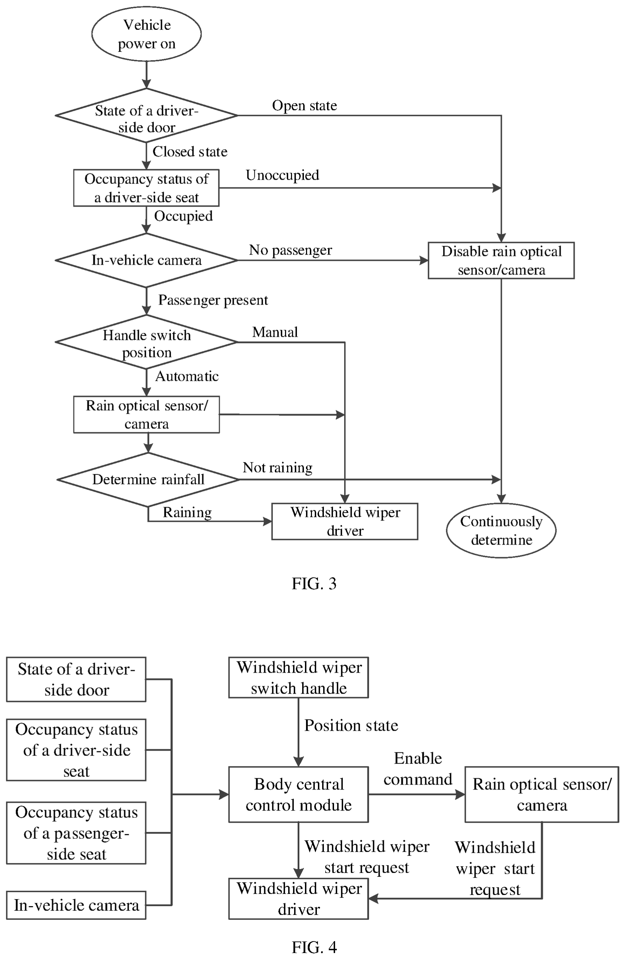

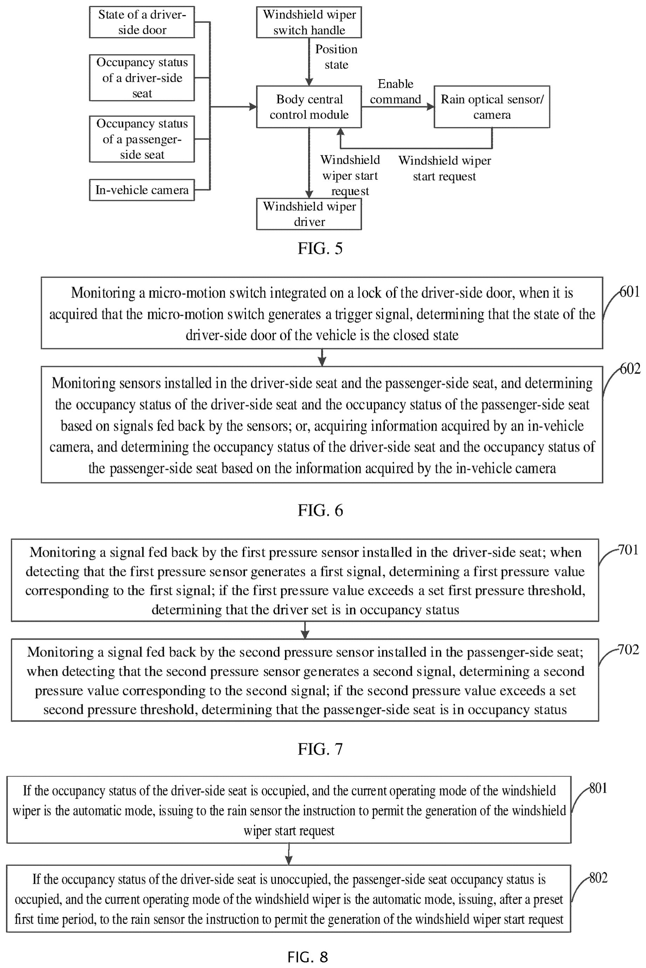

With reference to a scenario example, FIG. 3 is a windshield wiper control flowchart. As can be seen from FIG. 3, first, the state of the driver-side door is acquired. The state of the driver-side door is classified into an open state and a closed state. When the state of the driver-side door is the open state, it indicates that the vehicle is not being driven, at this time, the windshield wiper can stop operating, and the rain sensor needs to be disabled. When the state of the driver-side door is closed, the occupancy status of the driver-side seat can be used to determine whether there is a driver in the vehicle. If there is no driver, the rain sensor needs to be disabled. If there is a driver in the vehicle, the operating mode of the windshield wiper at this time can be determined. The operating mode of the windshield wiper can be classified into a manual mode and an automatic mode. FIG. 4 is a schematic diagram of the windshield wiper operating in the automatic mode. FIG. 5 is a schematic diagram of the windshield wiper operating in the manual mode. The operation in the manual mode mainly depends on the user controlling the operation of the windshield wiper by operating the windshield wiper switch handle, the windshield wiper switch handle has positions such as off, automatic, low speed, high speed, and momentary intermittent single trigger positions. When a user switches the windshield wiper switch handle to the off position by operating the windshield wiper switch handle, a windshield wiper off instruction is transmitted to the windshield wiper driver, so that the windshield wiper driver stops driving the windshield wiper to operate. When a user switches the windshield wiper switch handle to a low speed, high speed or momentary intermittent single trigger position by operating the windshield wiper switch handle, a windshield wiper start request instruction is transmitted to the windshield wiper driver for low speed operation, high speed operation or momentary intermittent single trigger operation of the windshield wiper, so that the windshield wiper driver drives the windshield wiper to operate. However, when the windshield wiper switch handle is in the low speed, high speed or momentary intermittent single trigger position, and the state of the driver-side door is the open state, in order to prevent the windshield wiper from continuing to operate while the driver-side door is open, the instruction to disable reception of the windshield wiper start request is transmitted to the windshield wiper driver. Thus, the windshield wiper driver stops receiving instructions corresponding to any positions of the windshield wiper switch handle, thereby stopping driving the windshield wiper to operate.

When the user moves the windshield wiper switch handle to the automatic position, a windshield wiper automatic operation instruction is transmitted to the windshield wiper driver, so that the windshield wiper driver can put the windshield wiper in the automatic mode. As can be seen from FIG. 4, when the windshield wiper is in the automatic mode, the windshield wiper driver mainly determines whether to turn on the rain brush by analyzing the state of the driver-side door, whether it is raining, and whether someone is in the vehicle. Specifically, whether it is raining is determined through the rain sensor. Optionally, the rain sensor is a rain optical sensor or a camera. The installation position of the camera can be inside the vehicle or outside the vehicle. Regardless of the installation position of the camera, the main function of the camera is to detect whether it is raining outside the vehicle. When the rain sensor detects that it is raining, a windshield wiper start request instruction is generated, and whether someone is in the vehicle is determined through an in-vehicle camera or a pressure sensor on the seat. When the state of the vehicle's door is the open state, the instruction to inhibit generation of the windshield wiper start request is transmitted to the rain sensor, so that even if the rain sensor detects that it is raining outside, the rain sensor does not generate the windshield wiper start request instruction.

When the state of the vehicle's door is the closed state, whether a driver or passenger is inside the vehicle is acquired through the in-vehicle camera or the pressure sensor. When there is no driver or passenger inside the vehicle, the instruction to disable reception of the windshield wiper start request can be transmitted to the windshield wiper driver when the operation state of the windshield wiper is the manual state; the instruction to inhibit generation of the windshield wiper start request can be transmitted to the windshield wiper detector on a long-term basis when the operation state of the windshield wiper is the automatic state. However, when the operation state of the windshield wiper is the automatic state, the instruction to permit the reception of the windshield wiper start request can be transmitted to the windshield wiper driver. Thus, the windshield wiper starter can accept windshield wiper start request instructions generated by the windshield wiper switch handle at different positions to drive the windshield wiper to operate. When the operation state of the windshield wiper is the automatic state, the instruction to permit the generation of the windshield wiper start request can be transmitted to the rain sensor, so that when the rain sensor detects rain outside, it generates the windshield wiper start instruction and issues the windshield wiper start instruction to the windshield wiper driver, so that the windshield wiper driver drives the windshield wiper to operate.

In the example, a current state of a driver-side door of a vehicle is acquired. If the current state of the driver-side door of the vehicle is an open state, a current operating mode of a windshield wiper is acquired. If the current operating mode of the windshield wiper is a manual mode, an instruction to disable reception of a windshield wiper start request is transmitted to a windshield wiper driver. If the current operating mode of the windshield wiper is an automatic mode, an instruction to inhibit generation of the windshield wiper start request is transmitted to a rain sensor. The rain sensor is configured to detect rainfall and issue the windshield wiper start request to the windshield wiper driver upon detecting rainfall. The windshield wiper driver is configured to turn on the windshield wiper based on the windshield wiper start request. If the current state of the driver-side door of the vehicle is a closed state, occupancy status of a driver-side seat and occupancy status of a passenger-side seat are acquired. If the occupancy status of the driver-side seat or the occupancy status of the passenger-side seat is occupied, and the current operating mode of the windshield wiper is the manual mode, an instruction to enable the reception of the windshield wiper start request is transmitted to the windshield wiper driver. If the occupancy status of the driver-side seat or the occupancy status of the passenger-side seat is occupied, and the current operating mode of the windshield wiper is the automatic mode, an instruction to permit the generation of the windshield wiper start request is transmitted to the rain sensor. According to the method provided in the example, based on the determination of the state of the driver-side door, the occupancy status of the driver-side seat or the occupancy status of the passenger-side seat, and a current operating mode of the windshield wiper, it is determined whether the rain brush needs to be driven based on the windshield wiper driver under different conditions. The flexibility of the windshield wiper driver driving the windshield wiper to work is improved.

Optionally, FIG. 6 is a flowchart of another windshield wiper control method provided by Embodiment 1 of the present application, where the step 201 includes:
Step 601, monitoring a micro-motion switch integrated on a lock of the driver-side door, when it is acquired that the micro-motion switch generates a trigger signal, determining that the state of the driver-side door of the vehicle is the closed state.

In the step 203, the acquisition of the occupancy status of the driver-side seat and the occupancy status of the passenger-side seat includes:
Step 602, monitoring sensors installed in the driver-side seat and the passenger-side seat, and determining the occupancy status of the driver-side seat and the occupancy status of the passenger-side seat based on signals fed back by the sensors; or,
acquiring information acquired by an in-vehicle camera, and determining the occupancy status of the driver-side seat and the occupancy status of the passenger-side seat based on the information acquired by the in-vehicle camera.

In combination with a scenario example, a micro-motion switch may be installed on the lock of the driver-side door, and the state of the micro-motion switch may be periodically detected, for example, the state of the micro-motion switch is detected every one millisecond. If the driver-side door of the vehicle is closed, the micro-motion switch will be triggered to enter a closed state. The micro-motion switch will continuously generate a first signal, a high-level signal can be selected as the first signal. If the driver-side door of the vehicle is open, the micro-motion switch is in an opened state, the micro-motion switch continuously generates a second signal. The second signal can have a low-level. If it is detected that the micro-motion switch generates the first signal, then it indicates that at this time the driver-side door is in a closed state. If it is detected that the micro-motion switch generates the second signal, then it indicates that at this time the driver-side door is in an opened state.

As an example, different pressure sensors may be respectively installed at the driver-side seat and the passenger-side seat, whether the driver-side seat or the passenger-side seat is occupied is determined through the pressure sensors. Occupied means someone is present on the seat. Specifically, a first pressure sensor is installed at the driver-side seat, whether the driver-side seat is occupied can be indicated by the first pressure sensor. A second pressure sensor is installed at the passenger-side seat. Since multiple passenger-side seats may exist in one vehicle, the number of the second pressure sensors may be multiple. Whether the passenger-side seats are occupied can be indicated by the second pressure sensors. The pressure sensor can detect the change of pressure. Specifically, the pressure sensor, under the condition of detecting different pressure values, will output different signals, which may be voltage signals or current signals. Based on the magnitude of the voltage signal or the current signal, it is determined whether the driver-side seat or the passenger-side seat is occupied. In addition to determining occupancy through the pressure sensors, it is also possible to acquire the real time information inside the vehicle via the in-vehicle camera, the real time information inside the vehicle can be acquired via the in-vehicle camera, either by taking photos or by recording videos. Based on the real-time information inside the vehicle, it is determined whether the driver-side seat or the passenger-side seat is occupied. The present example provides a method for acquiring the state of the driver-side door, the occupancy status of the driver-side seat and the occupancy status of the passenger-side seat, in this way, the state of the driver-side door, the occupancy status of the driver-side seat and the occupancy status of the passenger-side seat at this time can be known in real time.

Optionally, FIG. 7 is a flowchart of another windshield wiper control method provided by Embodiment 1 of the present application. In the step 602, the monitoring the sensors installed in the driver-side seat and the passenger-side seat, and determining the occupancy status of the driver-side seat and the occupancy status of the passenger-side seat based on the signals fed back by the sensors, including:
Step 701, monitoring a signal fed back by the first pressure sensor installed in the driver-side seat; when detecting that the first pressure sensor generates a first signal, determining a first pressure value corresponding to the first signal; if the first pressure value exceeds a set first pressure threshold, determining that the driver set is in occupancy status.
Step 702, monitoring a signal fed back by the second pressure sensor installed in the passenger-side seat; when detecting that the second pressure sensor generates a second signal, determining a second pressure value corresponding to the second signal; if the second pressure value exceeds a set second pressure threshold, determining that the passenger-side seat is in occupancy status.

In combination with a scenario example, the first pressure sensor installed on the driver-side seat and the second pressure sensor installed on the passenger-side seat output different first signals as the detected pressure changes. The first signal may be a voltage signal and a current signal, and the voltage signal and the current signal vary in proportion to the increase in the detected voltage. Taking the voltage signal as an example, for instance, a pressure threshold can be set. When a pressure value exceeding the pressure threshold is generated, it indicates the presence of a passenger. The pressure threshold generated by the driver-side seat can be set as the first pressure threshold, and the pressure threshold generated by the passenger-side seat can be set as the second pressure threshold. Specifically, when detecting that the first pressure sensor generates a first signal, the first pressure value corresponding to the first signal is determined based on the voltage value of the first signal. If the first pressure value is greater than the first pressure threshold, it indicates that there is a driver in the driver-side seat. Correspondingly, when detecting that the second pressure sensor generates a second signal, the second pressure value corresponding to the second signal is determined based on the voltage value of the second signal. If the second pressure value is greater than the second pressure threshold, it indicates that there is a passenger in the passenger-side seat. In the present example, whether the seats are occupied can be accurately determined based on the pressure sensors.

Optionally, FIG. 8 is a flowchart of yet another windshield wiper control method provided by Embodiment 1 of the present application. In the step 203, if the occupancy status of the driver-side seat or the occupancy status of the passenger-side seat is occupied, and the current operating mode of the windshield wiper is the automatic mode, issuing to the rain sensor an instruction to permit the generation of the windshield wiper start request, including:
Step 801, if the occupancy status of the driver-side seat is occupied, and the current operating mode of the windshield wiper is the automatic mode, issuing to the rain sensor the instruction to permit the generation of the windshield wiper start request;
Step 802, if the occupancy status of the driver-side seat is unoccupied, the passenger-side seat occupancy status is occupied, and the current operating mode of the windshield wiper is the automatic mode, issuing, after a preset first time period, to the rain sensor the instruction to permit the generation of the windshield wiper start request.

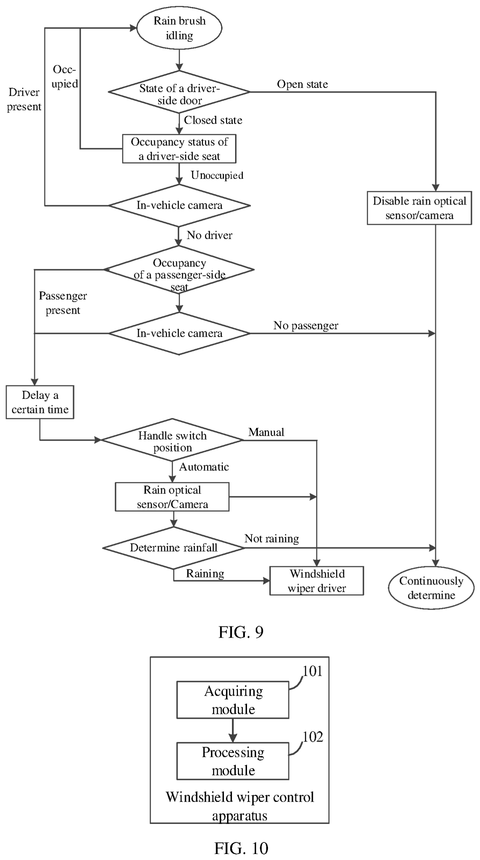

In combination with a scenario example, when the driver-side seat is occupied, it indicates that the driver is in the vehicle, the rain sensor should operate normally. The instruction to generate the windshield wiper start request can be transmitted to the rain sensor, so that the rain sensor can detect rainfall normally. FIG. 9 is another windshield wiper control flowchart. What is illustrated in FIG. 9 is that during normal operation of the windshield wiper, when the vehicle's door is closed or the driver-side seat is occupied, the windshield wiper needs to continue its normal operation. When the vehicle's door is open, or the driver-side seat is unoccupied, that is, when the driver gets out of the vehicle, the rain sensor needs to be disabled. However, if there are other passengers in the vehicle, a preset first time period can be set. After the preset first time period, an instruction to generate a windshield wiper start request is transmitted to the rain sensor. For example, the first time period is set as one minute, after one minute, the instruction to generate the windshield wiper start request is transmitted to the rain sensor, so that the rain sensor can detect rainfall normally. In the present example, when there are other passengers in the vehicle, the instruction to generate the windshield wiper start request is transmitted to the rain sensor after the preset first time period, so that the rain sensor can detect rainfall normally, thereby allowing the passengers to observe the outside situation and improving user experience.

In the embodiments, a current state of a driver-side door of a vehicle is acquired. If the current state of the driver-side door of the vehicle is an open state, a current operating mode of a windshield wiper is acquired. If the current operating mode of the windshield wiper is a manual mode, an instruction to disable reception of a windshield wiper start request is transmitted to a windshield wiper driver. If the current operating mode of the windshield wiper is an automatic mode, an instruction to inhibit generation of the windshield wiper start request is transmitted to a rain sensor. The rain sensor is configured to detect rainfall and transmit the windshield wiper start request to the windshield wiper driver upon detecting rainfall. The windshield wiper driver is configured to turn on the windshield wiper based on the windshield wiper start request. If the current state of the driver-side door of the vehicle is a closed state, occupancy status of a driver-side seat and occupancy status of a passenger-side seat are acquired. If the occupancy status of the driver-side seat or the occupancy status of the passenger-side seat is occupied, and the current operating mode of the windshield wiper is the manual mode, an instruction to enable the reception of the windshield wiper start request is transmitted to the windshield wiper driver. If the occupancy status of the driver-side seat or the occupancy status of the passenger-side seat is occupied, and the current operating mode of the windshield wiper is the automatic mode, an instruction to permit the generation of the windshield wiper start request is transmitted to the rain sensor. Based on the method provided in the embodiments, based on the determination of the state of the driver-side door, the occupancy status of the driver-side seat or the occupancy status of the passenger-side seat, and a current operating mode of the windshield wiper, it is determined whether the rain brush needs to be driven based on the windshield wiper driver under different conditions. The flexibility of the windshield wiper driver driving the windshield wiper to work is improved.

### Embodiment 2

FIG. 10 is a windshield wiper control apparatus provided by Embodiment 2 of the present application. As shown in FIG. 10, the apparatus includes:
an acquiring module 101, configured to acquire a current state of a driver-side door of a vehicle;
a processing module 102, configured to: if the current state of the driver-side door of the vehicle is an open state, acquire a current operating mode of a windshield wiper; if the current operating mode of the windshield wiper is a manual mode, issue to a windshield wiper driver an instruction to disable reception of a windshield wiper start request; if the current operating mode of the windshield wiper is an automatic mode, issue to a rain sensor an instruction to inhibit generation of the windshield wiper start request; the rain sensor is configured to detect rainfall and issue the windshield wiper start request to the windshield wiper driver upon detecting rainfall, and the windshield wiper driver is configured to turn on the windshield wiper based on the windshield wiper start request;
the processing module 102 is further configured to: if the current state of the driver-side door of the vehicle is a closed state, acquire occupancy status of a driver-side seat and occupancy status of a passenger-side seat; if the occupancy status of the driver-side seat or the occupancy status of the passenger-side seat is occupied, and the current operating mode of the windshield wiper is the manual mode, issue to the windshield wiper driver an instruction to enable the reception of the windshield wiper start request; if the occupancy status of the driver-side seat or the occupancy status of the passenger-side seat is occupied, and the current operating mode of the windshield wiper is the automatic mode, issue to the rain sensor an instruction to permit the generation of the windshield wiper start request.

With reference to a scenario example, firstly, the acquiring module 101 acquires the state of the driver-side door. The state of the driver-side door is classified into an open state and a closed state. When the state of the driver-side door is the open state, it indicates that the vehicle is not being driven, at this time, the windshield wiper can stop operating. FIG. 3 is a schematic diagram of an example for controlling the operation of the windshield wiper. The operating mode of the windshield wiper can be classified into the manual mode and the automatic mode. The operation in the manual mode mainly depends on the user controlling the operation of the windshield wiper by operating the windshield wiper switch handle, the windshield wiper switch handle has positions such as off, automatic, low speed, high speed, and momentary intermittent single trigger positions. When a user switches the windshield wiper switch handle to the off position by operating the windshield wiper switch handle, the processing module 102 issues a windshield wiper off instruction to the windshield wiper driver, so that the windshield wiper driver stops driving the windshield wiper to operate. When a user switches the windshield wiper switch handle to a low speed, high speed or momentary intermittent single trigger position by operating the windshield wiper switch handle, a windshield wiper start request instruction is issued to the windshield wiper driver for low speed operation, high speed operation or momentary intermittent single trigger operation of the windshield wiper, so that the windshield wiper driver drives the windshield wiper to operate. However, when the windshield wiper switch handle is in the low speed, high speed or momentary intermittent single trigger position, and the state of the driver-side door is the open state, in order to prevent the windshield wiper from continuing to operate while the driver-side door is open, the instruction to disable reception of the windshield wiper start request is issued to the windshield wiper driver. Thus, the windshield wiper driver stops receiving instructions corresponding to any positions of the windshield wiper switch handle, thereby stopping driving the windshield wiper to operate.

When the user moves the windshield wiper switch handle to the automatic position, the processing module 102 issues a windshield wiper automatic operation instruction to the windshield wiper driver, so that the windshield wiper driver can put the windshield wiper in the automatic mode. As can be seen from FIG. 4, when the windshield wiper is in the automatic mode, the windshield wiper driver mainly determines whether to turn on the rain brush by analyzing whether it is raining and whether someone is in the vehicle. Specifically, whether it is raining is determined through the rain sensor. Optionally, the rain sensor is a rain optical sensor or a camera. The installation position of the camera can be inside the vehicle or outside the vehicle. Regardless of the installation position of the camera, the main function of the camera is to detect whether it is raining outside the vehicle. When the rain sensor detects that it is raining, a windshield wiper start request instruction is generated, and whether someone is in the vehicle is determined through an in-vehicle camera or a pressure sensor on the seat. When the state of the vehicle's door is the open state, the instruction to inhibit generation of the windshield wiper start request is transmitted to the rain sensor, so that even if the rain sensor detects that it is raining outside, the rain sensor does not generate the windshield wiper start request instruction.

When the state of the vehicle's door is the closed state, whether a driver or passenger is inside the vehicle is acquired through the in-vehicle camera or the pressure sensor. When there is no driver or passenger inside the vehicle, the instruction to disable reception of the windshield wiper start request can be transmitted to the windshield wiper driver when the operation state of the windshield wiper is the manual state; the instruction to inhibit generation of the windshield wiper start request can be transmitted to the windshield wiper detector on a long-term basis when the operation state of the windshield wiper is the automatic state. However, when the operation state of the windshield wiper is the automatic state, the instruction to permit the reception of the windshield wiper start request can be transmitted to the windshield wiper driver. Thus, the windshield wiper starter can accept windshield wiper start request instructions generated by the windshield wiper switch handle at different positions to drive the windshield wiper to operate. When the operation state of the windshield wiper is the automatic state, the instruction to permit the generation of the windshield wiper start request can be transmitted to the rain sensor, so that when the rain sensor detects rain outside, it generates the windshield wiper start instruction and issues the windshield wiper start instruction to the windshield wiper driver, so that the windshield wiper driver drives the windshield wiper to operate.

In the example, the acquiring module 101 acquires a current state of a driver-side door of a vehicle. If the current state of the driver-side door of the vehicle is an open state, a current operating mode of a windshield wiper is acquired. If the current operating mode of the windshield wiper is a manual mode, the processing module 102 issues to a windshield wiper driver an instruction to disable reception of a windshield wiper start request. If the current operating mode of the windshield wiper is an automatic mode, the processing module 102 issues to a rain sensor an instruction to inhibit generation of the windshield wiper start request. The rain sensor is configured to detect rainfall and issue the windshield wiper start request to the windshield wiper driver upon detecting rainfall. The windshield wiper driver is configured to turn on the windshield wiper based on the windshield wiper start request. If the current state of the driver-side door of the vehicle is a closed state, the processing module 102 acquires occupancy status of a driver-side seat and occupancy status of a passenger-side seat. If the occupancy status of the driver-side seat or the occupancy status of the passenger-side seat is occupied, and the current operating mode of the windshield wiper is the manual mode, the processing module 102 issues to the windshield wiper driver an instruction to enable the reception of the windshield wiper start request. If the occupancy status of the driver-side seat or the occupancy status of the passenger-side seat is occupied, and the current operating mode of the windshield wiper is the automatic mode, the processing module 102 issues to the rain sensor an instruction to permit the generation of the windshield wiper start request. According to the method provided in the example, based on the determination of the state of the driver-side door, the occupancy status of the driver-side seat or the occupancy status of the passenger-side seat, and a current operating mode of the windshield wiper, it is determined whether the rain brush needs to be driven based on the windshield wiper driver under different conditions. The flexibility of the windshield wiper driver driving the windshield wiper to work is improved.

Optionally, the acquiring module 101 is specifically configured to monitor a micro-motion switch integrated on a lock of the driver-side door, when it is acquired that the micro-motion switch generates a trigger signal, determine that the state of the driver-side door of the vehicle is the closed state;
the processing module 102 is specifically configured to monitor sensors installed in the driver-side seat and the passenger-side seat, and determine the occupancy status of the driver-side seat and the occupancy status of the passenger-side seat based on signals fed back by the sensors; or, acquire information acquired by an in-vehicle camera, and determine the occupancy status of the driver-side seat and the occupancy status of the passenger-side seat based on the information acquired by the in-vehicle camera.

In combination with a scenario example, a micro-motion switch may be installed on the lock of the driver-side door, and the acquiring module 101 may periodically detect the state of the micro-motion switch, for example, detect the state of the micro-motion switch every one millisecond. If the driver-side door of the vehicle is closed, the micro-motion switch will be triggered to enter a closed state. The micro-motion switch will continuously generate a first signal, a high-level signal can be selected as the first signal. If the driver-side door of the vehicle is open, the micro-motion switch is in an opened state, the micro-motion switch continuously generates a second signal. The second signal can have a low-level. If it is detected that the micro-motion switch generates the first signal, then it indicates that at this time the driver-side door is in a closed state. If it is detected that the micro-motion switch generates the second signal, then it indicates that at this time the driver-side door is in an opened state.

As an example, different pressure sensors may be respectively installed at the driver-side seat and the passenger-side seat. The processing module 102 determines whether the driver-side seat or the passenger-side seat is occupied. Occupied means someone is present on the seat. Specifically, a first pressure sensor is installed at the driver-side seat, whether the driver-side seat is occupied can be indicated by the first pressure sensor. A second pressure sensor is installed at the passenger-side seat. Since multiple passenger-side seats may exist in one vehicle, the number of the second pressure sensors may be multiple. Whether the passenger-side seats are occupied can be indicated by the second pressure sensors. The pressure sensor can detect the change of pressure. Specifically, the pressure sensor, under the condition of detecting different pressure values, will output different signals, which may be voltage signals or current signals. Based on the magnitude of the voltage signal or the current signal, it is determined whether the driver-side seat or the passenger-side seat is occupied. In addition to determining occupancy through the pressure sensors, it is also possible to acquire the real time information inside the vehicle via the in-vehicle camera, the real time information inside the vehicle can be acquired via the in-vehicle camera, either by taking photos or by recording videos. Based on the real-time information inside the vehicle, it is determined whether the driver-side seat or the passenger-side seat is occupied. The present example provides a method for acquiring the state of the driver-side door, the occupancy status of the driver-side seat and the occupancy status of the passenger-side seat, in this way, the state of the driver-side door, the occupancy status of the driver-side seat and the occupancy status of the passenger-side seat at this time can be known in real time.

Optionally, the processing module 102 is specifically further configured to monitor a signal fed back by the first pressure sensor installed in the driver-side seat; when detecting that the first pressure sensor generates a first signal, determine a first pressure value corresponding to the first signal; if the first pressure value exceeds a set first pressure threshold, determine that the driver set is in occupancy status;
the processing module 102 is specifically further configured to monitor a signal fed back by the second pressure sensor installed in the passenger-side seat; when detecting that the second pressure sensor generates a second signal, determine a second pressure value corresponding to the second signal; if the second pressure value exceeds a set second pressure threshold, determine that the passenger-side seat is in occupancy status.

In combination with a scenario example, the first pressure sensor installed on the driver-side seat and the second pressure sensor installed on the passenger-side seat by the processing module 102 output different first signals as the detected pressure changes. The first signal may be a voltage signal and a current signal, and the voltage signal and the current signal vary in proportion to the increase in the detected voltage. Taking the voltage signal as an example, for instance, a pressure threshold can be set. When a pressure value exceeding the pressure threshold is generated, it indicates the presence of a passenger. The pressure threshold generated by the driver-side seat can be set as the first pressure threshold, and the pressure threshold generated by the passenger-side seat can be set as the second pressure threshold. Specifically, when detecting that the first pressure sensor generates a first signal, the processing module 102 determines the first pressure value corresponding to the first signal based on the voltage value of the first signal. If the first pressure value is greater than the first pressure threshold, it indicates that there is a driver in the driver-side seat. Correspondingly, when detecting that the second pressure sensor generates a second signal, the processing module 102 determines the second pressure value corresponding to the second signal based on the voltage value of the second signal. If the second pressure value is greater than the second pressure threshold, it indicates that there is a passenger in the passenger-side seat. In the present example, whether the seats are occupied can be accurately determined based on the pressure sensors.

Optionally, the processing module 102 is specifically further configured to issue to the rain sensor the instruction to permit the generation of the windshield wiper start request if the occupancy status of the driver-side seat is occupied and the current operating mode of the windshield wiper is the automatic mode;
the processing module 102 is specifically further configured to: after a preset first time period, issue to the rain sensor the instruction to permit the generation of the windshield wiper start request if the occupancy status of the driver-side seat is unoccupied, the passenger-side seat occupancy status is occupied, and the current operating mode of the windshield wiper is the automatic mode.

In combination with a scenario example, when the driver-side seat is occupied, it indicates that the driver is in the vehicle, the rain sensor should operate normally. The instruction to generate the windshield wiper start request can be transmitted to the rain sensor, so that the rain sensor can detect rainfall normally. When the driver gets out of the vehicle, that is, when the driver-side seat is unoccupied, but if there are other passengers in the vehicle, the preset first time period can be set. After the preset first time period, an instruction to generate a windshield wiper start request is transmitted to the rain sensor. For example, the first time period is set as one minute, after one minute, the instruction to generate the windshield wiper start request is transmitted to the rain sensor, so that the rain sensor can detect rainfall normally. In the present example, when there are other passengers in the vehicle, the instruction to generate the windshield wiper start request is transmitted to the rain sensor after the preset first time period, so that the rain sensor can detect rainfall normally, thereby allowing the passengers to observe the outside situation and improving user experience.

In the embodiment, the acquiring module 101 acquires a current state of a driver-side door of a vehicle. If the current state of the driver-side door of the vehicle is an open state, a current operating mode of a windshield wiper is acquired. If the current operating mode of the windshield wiper is a manual mode, the processing module 102 issues to a windshield wiper driver an instruction to disable reception of a windshield wiper start request. If the current operating mode of the windshield wiper is an automatic mode, the processing module 102 issues to a rain sensor an instruction to inhibit generation of the windshield wiper start request. The rain sensor is configured to detect rainfall and transmit the windshield wiper start request to the windshield wiper driver upon detecting rainfall. The windshield wiper driver is configured to turn on the windshield wiper based on the windshield wiper start request. If the current state of the driver-side door of the vehicle is a closed state, the processing module 102 acquires occupancy status of a driver-side seat and occupancy status of a passenger-side seat. If the occupancy status of the driver-side seat or the occupancy status of the passenger-side seat is occupied, and the current operating mode of the windshield wiper is the manual mode, the processing module 102 issues to the windshield wiper driver an instruction to enable the reception of the windshield wiper start request. If the occupancy status of the driver-side seat or the occupancy status of the passenger-side seat is occupied, and the current operating mode of the windshield wiper is the automatic mode, the processing module 102 issues to the rain sensor an instruction to permit the generation of the windshield wiper start request. According to the method provided in the embodiment, based on the determination of the state of the driver-side door, the occupancy status of the driver-side seat or the occupancy status of the passenger-side seat, and a current operating mode of the windshield wiper, it is determined whether the rain brush needs to be driven based on the windshield wiper driver under different conditions. The flexibility of the windshield wiper driver driving the windshield wiper to work is improved.

### Embodiment 3

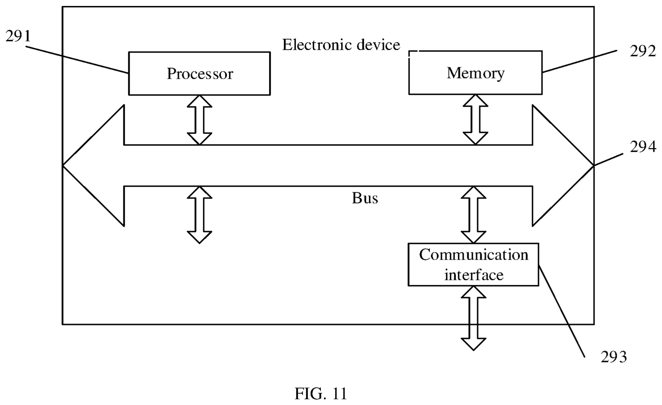

FIG. 11 is a structural diagram of an electronic device provided by Embodiment 3 of the present application. As shown in FIG. 11, the electronic device includes:
a processor (processor) 291, the server further includes a memory (memory) 292. The electronic device may further include a communication interface (Communication Interface) 293 and a bus 294. The processor 291, the memory 292, and the communication interface 293 may complete mutual communication through the bus 294. The communication interface 293 may be used for information transmission. The processor 291 may call the logic instruction in the memory 292 to execute the method as described in Embodiment 1.

In addition, the above logic instruction in the memory 292 may be implemented in the form of software functional units, when sold or used as independent products, it may be stored in a computer-readable storage medium.

The memory 292, as a computer-readable storage medium, may be configured to store software programs and computer-executable programs, such as program instructions/modules corresponding to the method in the embodiments of the present application. The processor 291, by operating the software program, instructions, and modules stored in the memory 292, executes functional applications and data processing, that is, implements the method as described in Embodiment 1.

The memory 292 may include a program storage area and a data storage area, where the program storage area may store an operating system and at least one application program required for functions; the data storage area may store data created according to the use of the terminal device. In addition, the memory 292 may include a high speed random access memory and may further include a non-volatile memory.

An embodiment of the present application provides a non-transitory computer-readable storage medium, in which computer-executable instructions are stored, and when the computer-executable instructions are executed by the processor, the method described in the foregoing embodiments is implemented.

Other embodiments of the present application will easily occur to those skilled in the art after considering the specification and practicing the invention disclosed herein. The present application is intended to cover any variations, uses or adaptations of the present application, which follow the general principles of the present application and include common sense or common technical means in the technical field that are not disclosed in the present application. The specification and examples are to be regarded as exemplary only, with the true scope and spirit of the present application being indicated by the following claims.

It should be understood that the present application is not limited to the precise structure described above and shown in the drawings, and various modifications and changes can be made without departing from its scope. The scope of the present application is limited only by the appended claims.

## Claims

1. A windshield wiper control method, **characterized by** comprising:
acquiring a current state of a driver-side door of a vehicle;
if the current state of the driver-side door of the vehicle is an open state, acquiring a current operating mode of a windshield wiper; if the current operating mode of the windshield wiper is a manual mode, issuing to a windshield wiper driver an instruction to disable reception of a windshield wiper start request; if the current operating mode of the windshield wiper is an automatic mode, issuing to a rain sensor an instruction to inhibit generation of the windshield wiper start request; the rain sensor is configured to detect rainfall and issue the windshield wiper start request to the windshield wiper driver upon detecting rainfall, and the windshield wiper driver is configured to turn on the windshield wiper based on the windshield wiper start request;
if the current state of the driver-side door of the vehicle is a closed state, acquiring occupancy status of a driver-side seat and occupancy status of a passenger-side seat; if the occupancy status of the driver-side seat or the occupancy status of the passenger-side seat is occupied, and the current operating mode of the windshield wiper is the manual mode, issuing to the windshield wiper driver an instruction to enable the reception of the windshield wiper start request; if the occupancy status of the driver-side seat or the occupancy status of the passenger-side seat is occupied, and the current operating mode of the windshield wiper is the automatic mode, issuing to the rain sensor an instruction to permit the generation of the windshield wiper start request.

2. The method according to claim 1, wherein the acquiring the state of the driver-side door of the vehicle comprises:
monitoring a micro-motion switch integrated on a lock of the driver-side door, when it is acquired that the micro-motion switch generates a trigger signal, determining that the state of the driver-side door of the vehicle is the closed state;
wherein the acquiring the occupancy status of the driver-side seat and the occupancy status of the passenger-side seat comprises:
monitoring sensors installed in the driver-side seat and the passenger-side seat, and determining the occupancy status of the driver-side seat and the occupancy status of the passenger-side seat based on signals fed back by the sensors; or,
acquiring information acquired by an in-vehicle camera, and determining the occupancy status of the driver-side seat and the occupancy status of the passenger-side seat based on the information acquired by the in-vehicle camera.

3. The method according to claim 2, wherein the monitoring the sensors installed in the driver-side seat and the passenger-side seat, and determining the occupancy status of the driver-side seat and the occupancy status of the passenger-side seat based on the signals fed back by the sensors comprises:
monitoring a signal fed back by a first pressure sensor installed in the driver-side seat; when detecting that the first pressure sensor generates a first signal, determining a first pressure value corresponding to the first signal; if the first pressure value exceeds a set first pressure threshold, determining that the driver set is in occupancy status;
monitoring a signal fed back by a second pressure sensor installed in the passenger-side seat; when detecting that the second pressure sensor generates a second signal, determining a second pressure value corresponding to the second signal; if the second pressure value exceeds a set second pressure threshold, determining that the passenger-side seat is in occupancy status.

4. The method according to claim 1, wherein the if the occupancy status of the driver-side seat or the occupancy status of the passenger-side seat is occupied, and the current operating mode of the windshield wiper is the automatic mode, issuing to the rain sensor an instruction to permit the generation of the windshield wiper start request, comprises:
if the occupancy status of the driver-side seat is occupied, and the current operating mode of the windshield wiper is the automatic mode, issuing to the rain sensor the instruction to permit the generation of the windshield wiper start request;
if the occupancy status of the driver-side seat is unoccupied, the passenger-side seat occupancy status is occupied, and the current operating mode of the windshield wiper is the automatic mode, issuing, after a preset first time period, to the rain sensor the instruction to permit the generation of the windshield wiper start request.

5. The method according to any one of claims 1 to 4, wherein the rain sensor is a rain optical sensor or a camera.

6. A windshield wiper control apparatus, **characterized in that**, the apparatus comprises:
an acquiring module, configured to acquire a current state of a driver-side door of a vehicle;
a processing module, configured to: if the current state of the driver-side door of the vehicle is an open state, acquire a current operating mode of a windshield wiper; if the current operating mode of the windshield wiper is a manual mode, issue to a windshield wiper driver an instruction to disable reception of a windshield wiper start request; if the current operating mode of the windshield wiper is an automatic mode, issue to a rain sensor an instruction to inhibit generation of the windshield wiper start request; the rain sensor is configured to detect rainfall and issue the windshield wiper start request to the windshield wiper driver upon detecting rainfall, and the windshield wiper driver is configured to turn on the windshield wiper based on the windshield wiper start request;
the processing module is further configured to: if the current state of the driver-side door of the vehicle is a closed state, acquire occupancy status of a driver-side seat and occupancy status of a passenger-side seat; if the occupancy status of the driver-side seat or the occupancy status of the passenger-side seat is occupied, and the current operating mode of the windshield wiper is the manual mode, issue to the windshield wiper driver an instruction to enable the reception of the windshield wiper start request; if the occupancy status of the driver-side seat or the occupancy status of the passenger-side seat is occupied, and the current operating mode of the windshield wiper is the automatic mode, issue to the rain sensor an instruction to permit the generation of the windshield wiper start request.

7. The apparatus according to claim 6, wherein the acquiring module is specifically configured to monitor a micro-motion switch integrated on a lock of the driver-side door, when it is acquired that the micro-motion switch generates a trigger signal, determine that the state of the driver-side door of the vehicle is the closed state;
the processing module is specifically configured to:
monitor sensors installed in the driver-side seat and the passenger-side seat, and determine the occupancy status of the driver-side seat and the occupancy status of the passenger-side seat based on signals fed back by the sensors; or,
acquire information acquired by an in-vehicle camera, and determine the occupancy status of the driver-side seat and the occupancy status of the passenger-side seat based on the information acquired by the in-vehicle camera.

8. The apparatus according to claim 7, wherein the processing module is specifically further configured to monitor a signal fed back by a first pressure sensor installed in the driver-side seat; when detecting that the first pressure sensor generates a first signal, determine a first pressure value corresponding to the first signal; if the first pressure value exceeds a set first pressure threshold, determine that the driver set is in occupancy status;
the processing module is specifically further configured to monitor a signal fed back by a second pressure sensor installed in the passenger-side seat; when detecting that the second pressure sensor generates a second signal, determine a second pressure value corresponding to the second signal; if the second pressure value exceeds a set second pressure threshold, determine that the passenger-side seat is in occupancy status.

9. The apparatus according to claim 6, wherein the processing module is specifically further configured to issue to the rain sensor the instruction to permit the generation of the windshield wiper start request if the occupancy status of the driver-side seat is occupied and the current operating mode of the windshield wiper is the automatic mode;
the processing module is specifically further configured to: after a preset first time period, issue to the rain sensor the instruction to permit the generation of the windshield wiper start request if the occupancy status of the driver-side seat is unoccupied, the passenger-side seat occupancy status is occupied, and the current operating mode of the windshield wiper is the automatic mode.

10. The apparatus according to any one of claims 6 to 9, wherein the rain sensor is a rain optical sensor or a camera.

11. An electronic device **characterized by** comprising: a processor, and a memory communicatively coupled to the processor;
the memory stores computer executable instructions;
the processor executes the computer execute instructions stored in the memory to implement the method according to any one of claims 1 to 5.

12. A computer-readable storage medium, **characterized in that**, the computer-readable storage medium stores computer executable instructions, the computer executable instructions, when executed by a processor, are configured to implement the method according to any one of claims 1 to 5.
